# EUROPEAN PATENT APPLICATION

(11) **EP 3 493 131 A1**
(43) Date of publication of application: **05.06.2019**
(21) Application number: 18203399.3
(22) Date of filing: 30.10.2018
(51) Int. Cl.: G06Q 20/02, G06Q 20/20, G06Q 20/32, G06Q 20/38, G06Q 20/42

(54) **A METHOD OF AUTHORIZING A PAYMENT REQUEST BY A CLOUD BASED PLATFORM AND A SERVER ARRANGED FOR SUPPORTING SAID METHOD**

(30) Priority: 30.11.2017 NL 2019997
(71) Applicant: PayCheckout Holding B.V., 5804 BV Venray (NL)
(72) Inventor: POELS, Martinus Petrus Johannes Maria, 5804 BV VENRAY (NL)
(74) Representative: Algemeen Octrooi- en Merkenbureau B.V.

(57) **Abstract**

A method of authorizing a payment request by a cloud based platform, said method comprising the steps of:
- receiving, from a merchant device, by said cloud based platform, said payment request comprising first payment data, wherein said first payment data comprises at least a payment amount;
- receiving, by said cloud based platform, an identification of a mobile user device, wherein said mobile user device is associated with a customer identifier corresponding to said payment request;
- establishing between said cloud based platform and said mobile user device, over the internet, a secure connection for carrying traffic;
- receiving, from said mobile user device, by said cloud based platform, encrypted second payment data over said secure connection, wherein said second payment data is encrypted using a unique public key;
- decrypting, by said cloud based platform, using a private key, said encrypted second payment data;
- determining, by said cloud based platform, that said decrypted second payment data confirms said first payment data, thereby authorizing said payment request. A server for supporting a method of authorizing a payment request by a cloud based platform.

## Description

The present disclosure according to a first aspect relates to a method of authorizing a payment request by a cloud based platform.

According to a second aspect the present disclosure relates to a server arranged for supporting a method of authorizing a payment request by a cloud based platform.

The method according to the present disclosure comprises the step of receiving, from a merchant device, by said cloud based platform, said payment request comprising first payment data, wherein said first payment data comprises at least a payment amount and a first unique identifier. A merchant device such as a payment terminal in an offline store or a website comprising a payment functionality is coupled via the internet to the cloud based platform. To this end said payment terminal is registered with said cloud based platform. The cloud based platform is arranged for receiving a payment request from the merchant device after a customer indicated he/she wants to buy something. In an offline environment a merchant indicates on the merchant device his intention to execute an authorization of a payment request. The execution of an authorization of a payment request on a website may be an integrated routine in the online buying process.

A further step of the method according the present disclosure is receiving, by said cloud based platform, an identification of a mobile user device, wherein said mobile user device is associated with a customer identifier corresponding to said payment request. Identification of a customer via an identification of a mobile user device allows verification of a registration of a customer and completion of authorization of the payment request by interaction with the customer via the mobile user device for confirmation of the payment request by the cloud based platform. The mobile user device may for instance by identified using a phone number or an IMEI number.

In addition, the method according the present disclosure comprises the step of establishing between said cloud based platform and said mobile user device, over the internet, a secure connection for carrying traffic. In an example the secure connection is realized using a Transport Layer Security (TLS) protocol to provide privacy and data integrity between the cloud based platform and the mobile user device.

The method according to the present disclosure comprises the steps of receiving, from said mobile user device, by said cloud based platform, encrypted second payment data over said secure connection, wherein said second payment data is encrypted using a unique public key and wherein said second payment data comprises at least a second unique identifier; and decrypting, by said cloud based platform, using a private key, said encrypted second payment data, wherein said private key together with said unique public key forms a unique key pair for asymmetric encryption. As such, said second payment data is transferred over the secure connection between the cloud based platform and the mobile user device while, in addition, being asymmetrically encrypted. By combining asymmetric encryption of the transferred data and a secure connection the security of the transfer is increased while man-in-the-middle attacks are avoided. The asymmetric encryption relies on a private key on the cloud based platform and a unique public key available on the mobile user device. Preferably, the private key is a unique private key that is unique for a registered customer. Preferably, said unique key pair is created during a step of registering said mobile user device by said cloud based platform.

A further step of the method according the present disclosure is determining, by said cloud based platform, that said decrypted second payment data confirms said first payment data, thereby authorizing said payment request. Authorization of a payment request is only confirmed once it is determined by the cloud based platform that the first and second payment data are in confirmation based on the input provided to the cloud based platform by the merchant device and the mobile user device.

The method according to the present disclosure relies at least partly on the insight that current mobile devices such as smart phones have limited or no capabilities to address the need to store data on mobile devices in a secure manner. By storing a unique public key on a mobile device instead of a private key the security of the method of authorizing a payment request is strongly increased since said unique public key can only be used to encrypt information that can only be decrypted by said cloud based platform using said private key. As such, abusive use of the unique public key for instance after theft of the public key will not result in payments without authorization from the customer since authorization of the payment request requires confirmation of the first payment data by the second payment data, wherein the second payment data comprises at least said second unique identifier.

Preferably, said first unique identifier comprises at least said identification of said mobile user device and a merchant identifier associated with said merchant device and wherein said second unique identifier comprises at least said identification of said mobile user device. This is in particular beneficial in a method for authorization of a payment request such as for instance in an online environment such as a web shop wherein the customer is already identified by the web shop through for instance an e-mail address or a phone number. By receiving said identification of said customer by said cloud based platform from said merchant device, there is no need for further receiving said merchant identifier from said mobile user device. Based on the combination of said identification of said mobile user device and a merchant identifier associated with said merchant device in said first payment data, there is no need for said cloud based platform to receive said merchant identifier from said mobile user device to execute said step of determining. In an offline situation this method is of particular benefit when said customer provides an identification of said mobile user device to said merchant device.

In an embodiment of the method according to the present disclosure, said first unique identifier comprises at least a merchant identifier associated with said merchant device and wherein said second unique identifier comprises at least said identification of said mobile user device and said merchant identifier associated with said merchant device. This is in particular beneficial in a method for authorization of a payment request such as for instance in an offline environment such as a hardware store or grocery wherein the customer is present in a store and not identified by the merchant device such as a cash register or payment terminal. By receiving said merchant identifier associated with said merchant device from said mobile user device, there is no need for further receiving said merchant identifier from said merchant device. Based on the combination of said identification of said mobile user device and a merchant identifier associated with said merchant device in said second payment data, there is no need for said cloud based platform to receive said merchant identifier from said merchant device in said first payment data to execute said step of determining. In an online situation, this is in particular beneficial for authorization of a payment request wherein the customer obtains a merchant identifier from the online merchant such as a web shop.

Preferably, said merchant identifier associated with said merchant device and said identification of said mobile user device are obtained, by said cloud based platform, by registration of said mobile user device and said merchant device prior to said payment request.

In a practical embodiment of the method according to the present disclosure, said method further comprising the steps of:
- encrypting, by said mobile user device, using said unique public key, said second payment data related to said payment request;
- transferring, by said mobile user device, said encrypted second payment data over said secure connection towards said cloud based platform.

It is advantageous if said method further comprises the step of transferring, by said cloud based platform, a payment identifier related to said payment request to said mobile user device. This is particularly beneficial in a method for authorization of a payment request such as for instance in an online environment such as a web shop wherein the customer is already identified by the web shop through for instance an e-mail address or a phone number. After receipt, by said cloud based platform, of an identification of a mobile user device, the cloud based platform provides a message to said mobile user device before establishing said secure connection for data traffic.

In this regard it is preferred if said message is a push message containing said payment amount and said merchant identifier. Preferably, said message is readable by said customer through said mobile user device without the need for decrypting said message using a private key.

In an embodiment of the method of authorizing a payment request by a cloud based platform according to the present disclosure, said method further comprises the step of receiving, by said mobile user device, said merchant identifier via near field communication such as RFID, bar code or QR code at said location of said merchant. This is particularly beneficial in a method for authorization of a payment request such as for instance in an offline environment such as a hardware store or grocery wherein the customer is present in a store and not identified by the merchant device such as a cash register or payment terminal.

In a very secure method of authorizing a payment request by a cloud based platform according to the present disclosure said method further comprises the steps of:
- establishing between said cloud based platform and said merchant device, over the internet, a further secure connection for carrying traffic;
- wherein said payment request is obtained, by said cloud based platform, over said further secure connection.
This is beneficial for avoiding or at least significantly reducing the risk of man-in-the-middle attacks between the merchant device and the cloud base platform.

In a preferred embodiment of a method of authorizing a payment request by a cloud based platform said second payment data and a customer specific authorization code is encrypted using said unique public key. This is beneficial for realising a relative secure method of authorizing a payment request. Abusive use of the mobile user device for instance after theft of the mobile user device is avoided or at least greatly reduced by requiring entry of the customer specific authorization code such as a pin code, a finger print or an iris scan.

It is advantageous if said cloud based platform after authorization of said payment request initiates a payment related to said payment request to transfer said payment amount. In an embodiment of a method of authorizing a payment request by a cloud based platform, said payment is completed by said cloud based platform.

According to a second aspect the present disclosure relates to a server arranged for supporting a method of authorizing a payment request by a cloud based platform, said server comprising:
- receiving equipment arranged for receiving, from a merchant device , said payment request comprising first payment data, wherein said first payment data comprises at least a payment amount and a first unique identifier, wherein said receiving equipment is arranged for receiving an identification of a mobile user device, wherein said mobile user device is associated with a customer identifier corresponding to said payment request;
- connection equipment arranged for establishing, over the internet, a secure connection for carrying traffic between said server and said mobile user device, wherein said receiving equipment is further arranged for receiving, from said mobile user device, encrypted second payment data over said secure connection, wherein said second payment data is encrypted using a unique public key and wherein said second payment data comprises at least a second unique identifier;
- decrypting equipment arranged for decrypting, using a private key, said encrypted second payment data, wherein said private key together with said unique public key forms a unique key pair for asymmetric encryption;
- determining equipment arranged for determining that said decrypted second payment data confirms said first payment data, thereby authorizing said payment request.
Benefits of the server according to second aspect of the present disclosure are analogue to the benefits of the method according to the first aspect of the present disclosure.

It is advantageous if said receiving equipment is further arranged for receiving said first unique identifier and said second unique identifier, wherein said first unique identifier comprises at least said identification of said mobile user device and a merchant identifier associated with said merchant device and wherein said second unique identifier comprises at least said identification of said mobile user device.

In an embodiment of said server said receiving equipment is further arranged for receiving said first unique identifier and said second unique identifier, wherein said first unique identifier comprises at least a merchant identifier associated with said merchant device and wherein said second unique identifier comprises at least a said identification of said mobile user device and said merchant identifier associated with said merchant device.

The present disclosure will now be explained by means of a description of preferred embodiments of a method according to the present disclosure, in which reference is made to the following schematic figures, in which:
Fig. 1: a method for authorization of a payment request is shown;
Fig. 2: a method for authorization of a payment request is shown;

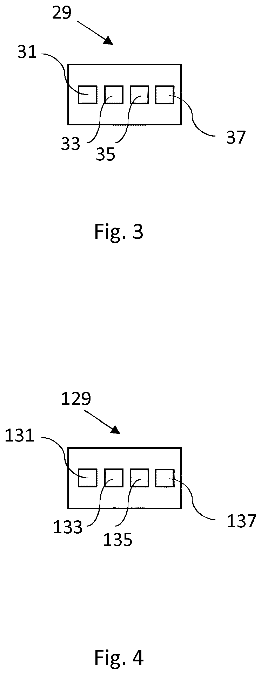

Fig. 3 a server for supporting a method for authorization of a payment request is shown;
Fig. 4 a server for supporting a method for authorization of a payment request is shown.

Method 1 for registering an authorization of a payment request 9 comprises a step wherein the payment request 9 is received by a cloud based platform 7 comprising a server 129 for supporting said method 1. Said payment request 9 is generated by a merchant device 3 such as an online web shop after a customer indicated the intention to have a purchase transaction authorized by said cloud based platform 7. The payment request 9 comprises a payment amount, an identification of the merchant device 3 and a customer identifier associated with a mobile user device 5 for identification of said mobile user device 5. The customer identifier is provided by said customer of said online web shop for instance by providing a phone number or a mail address to said online web shop. Such customer identifier may for instance be available from previous registration of the customer with said web shop or by providing said information during a purchase process facilitated by said web shop.

After receiving said payment request 9, said cloud based platform 7 verifies said customer identifier and said identification of said merchant device 3. If said customer and merchant are identified based on said customer identifier and said identification of said merchant device 3 the cloud based platform 7 pushes a message 11 to said mobile user device 5 associated with said customer identifier. Said message 11 comprises said payment amount and said identification of said merchant device 3. After receiving said message 11, a secure connection 13 applying the Transport Layer Security protocol is established for carrying traffic over the internet between the mobile user device 5 and the cloud based platform 7.

A user of said mobile user device 5 inserts a pin code in said mobile user device 5 to authorize the payment request on his behalf. Said pin code is a code that was chosen by said customer during registration of said mobile user device 5 with said cloud based platform 7. After this authorization by the customer, second payment data 15 comprising an IMEI number of said mobile user device for said identification of said mobile used device and said pin code is encrypted using a unique public key 21. Said unique public key 21 is associated with a registration of said mobile user device 5 with said cloud based platform 7 and used for encrypting said second payment data 15 and said pin code. The cloud based platform 7 comprises a private key 19 that together with the unique public key 21 forms a unique key pair for asymmetric encryption of data traffic between said cloud based platform 7 and said mobile user device 5. Said unique key pair is created by said cloud based platform 7 through registration of said mobile user device 5 prior to authorization of said payment request 9. Said unique key pair is at least unique in that said unique public key 21 is created specifically for said mobile user device 5. Said encrypted second payment data 15 and said pin code is transferred, by said mobile user device 5, over said secure connection 13 towards said cloud based platform 7.

Said encrypted second payment data 15 and said pin code is decrypted, by said cloud based platform 7, using said private key 19. After decryption of said second payment data 15 and said pin code, by said cloud based platform 7, said cloud based platform 7 determines whether said second payment data 15 confirms said first payment data and whether said pin code is correct. To this end said cloud based platform 7 determines whether said IMEI number and pin code is associated with said phone number or said mail address. After determining said association is positive, said cloud based platform 7 authorizes said payment request 9 and transfers a confirmation 17 over the internet to said merchant device 3. In addition, said cloud based platform 7 initiates a payment related to said payment request 9 to transfer said payment amount.

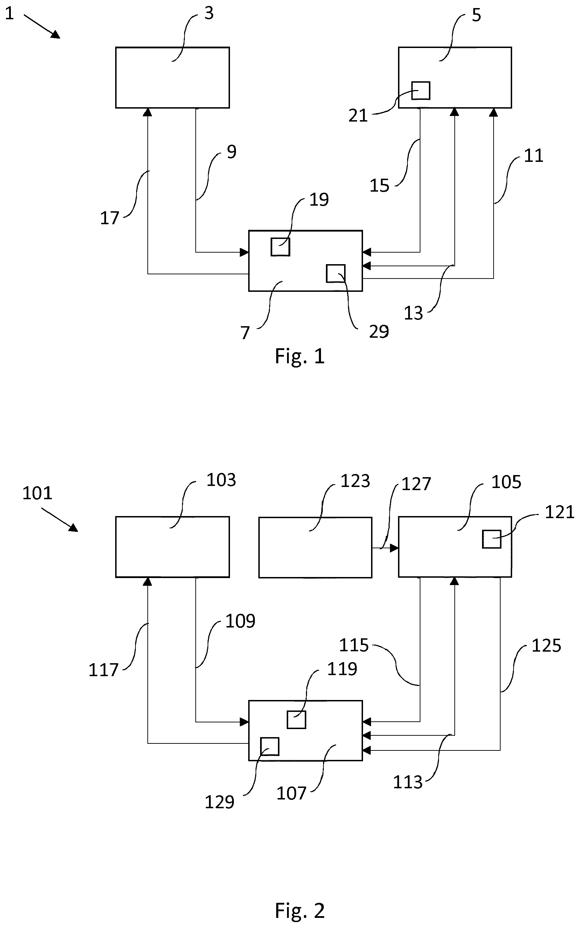

Method 101, shown in Fig. 2, differs from method 1 mainly in that said cloud based platform 107 receives said merchant identifier from said mobile user device 105 via an encrypted message 125. Elements of method 101 that are similar to elements of method 1 are provided with a reference number equal to the reference number of method 1 raised by 100. The merchant identifier is received by said mobile user device 105 by scanning 127 an RFID tag 123 at the location of the merchant. Said RFID tag 123 may for instance be provided next to a payment terminal of said merchant. After scanning 127 said RFID tag 123 said consumer enters his pin code and subsequently transfers said encrypted message 125 to said cloud based platform 107, wherein said message 125 is encrypted using said unique public key 121. After receipt of said encrypted message 125 by said cloud based platform 107 said cloud based platform 107 waits for receipt of a payment request 109 from a merchant device 103 associated with said merchant identifier. Alternatively it is conceivable said cloud based platform 107 pushes a request to said merchant device 103 associated with said merchant identifier to request said payment request 109.

Server 29 for supporting for supporting said method 1 of authorizing a payment request comprising receiving equipment 31. Receiving equipment 31 is arranged for receiving said payment request 9 from said merchant device 3. Said receiving equipment 31 is further arranged for receiving an identification of said mobile user device 5. Server 29 further comprises connection equipment 33, decrypting equipment 35 and determining equipment 37. Said connection equipment 33 is arranged for establishing, over the internet, said secure connection 13 for carrying traffic between said server 29 and said mobile user device 5, wherein said receiving equipment 33 is further arranged for receiving, from said mobile user device 5, encrypted second payment data 15 over said secure connection 13. Said decrypting equipment 35 is arranged for decrypting said encrypted second payment data 15. Said determining equipment 37 is arranged for determining that said decrypted second payment data 15 confirms said first payment data.

Server 129 for supporting said method 101 of authorizing a payment request is analogue to said server 29. Elements of server 129 that are similar to elements of server 29 are provided with a reference number equal to the reference number of server 29 raised by 100.

## Claims

1. A method (1, 101) of authorizing a payment request by a cloud based platform (7, 107), said method comprising the steps of:
- receiving, from a merchant device (3, 103), by said cloud based platform (7, 107), said payment request (9, 109) comprising first payment data, wherein said first payment data comprises at least a payment amount and a first unique identifier;
- receiving, by said cloud based platform (7, 107), an identification of a mobile user device (5, 105), wherein said mobile user device (5, 105) is associated with a customer identifier corresponding to said payment request (9, 109);
- establishing between said cloud based platform (7, 107) and said mobile user device (5, 105), over the internet, a secure connection (13, 113) for carrying traffic;
- receiving, from said mobile user device (5, 105), by said cloud based platform (7, 107), encrypted second payment data (15, 115) over said secure connection (13, 113), wherein said second payment data (15, 115) is encrypted using a unique public key (21, 121) and wherein said second payment data (15, 115) comprises at least a second unique identifier;
- decrypting, by said cloud based platform (7, 107), using a private key (19, 119), said encrypted second payment data (15, 115), wherein said private key (19, 119) together with said unique public key (21, 121) forms a unique key pair for asymmetric encryption;
- determining, by said cloud based platform (7, 107), that said decrypted second payment data (15, 115) confirms said first payment data, thereby authorizing said payment request (9, 109).

2. A method (1) of authorizing a payment request (9) by a cloud based platform (7) according to claim 1, wherein said first unique identifier comprises at least said identification of said mobile user device (5) and a merchant identifier associated with said merchant device (3) and wherein said second unique identifier comprises at least said identification of said mobile user device (5).

3. A method (101) of authorizing a payment request (109) by a cloud based platform (107) according to claim 1, wherein said first unique identifier comprises at least a merchant identifier associated with said merchant device (103) and wherein said second unique identifier comprises at least said identification of said mobile user device (105) and said merchant identifier associated with said merchant device (103).

4. A method (1, 101) of authorizing a payment request (9, 109) by a cloud based platform (7, 107) according to any one of the preceding claims, said method (1, 101) further comprising the steps of:
- encrypting, by said mobile user device (5, 105), using said unique public key (21, 121), said second payment data (15, 115) related to said payment request (9, 109);
- transferring, by said mobile user device (5, 105), said encrypted second payment data (15, 115) over said secure connection (13, 113) towards said cloud based platform (7, 107).

5. A method (1) of authorizing a payment request (9) by a cloud based platform (7) according to any one of the preceding claims, said method (1) further comprising the step of:
- transferring, by said cloud based platform (7), a payment identifier (11) related to said payment request (9) to said mobile user device (5).

6. A method (1) of authorizing a payment request (9) by a cloud based platform (7) according to claim 2 in combination claim 5, wherein said payment identifier (11) comprises said payment amount and said merchant identifier.

7. A method (101) of authorizing a payment request (109) by a cloud based platform (107) according to claim 3, said method (101) further comprising the step of:
- receiving, by said mobile user device (105), said merchant identifier via near field communication such as RFID, bar code or QR code at said location of said merchant.

8. A method (1, 101) of authorizing a payment request by a cloud based platform (7, 107) according to any one of the preceding claims, wherein said method (1, 101) further comprises the steps of:
- establishing between said cloud based platform (7, 107) and said merchant device (3, 103), over the internet, a further secure connection for carrying traffic;
- wherein said payment request (9, 109) is obtained, by said cloud based platform (7, 107), over said further secure connection.

9. A method (1, 101) of authorizing a payment request (9, 109) by a cloud based platform (7, 107) according to any one of the preceding claims, wherein said second payment data (15, 115) and a customer specific authorization code is encrypted using said unique public key (21, 121).

10. A method (1, 101) of authorizing a payment request (9, 109) by a cloud based platform (7, 107) according to claim 9, wherein said customer specific authorization code comprises at least one of a numerical code, a finger print or an iris scan.

11. A method (1, 101) of authorizing a payment request (9, 109) by a cloud based platform (7, 107) according to any one of the preceding claims, wherein after said step of determining, said cloud based platform (7, 107) initiates a payment related to said payment request (9, 109) to transfer said payment amount.

12. A server (29, 129) arranged for supporting a method (1, 101) of authorizing a payment request by a cloud based platform (7, 107), said server (29, 129) comprising:
- receiving equipment (31, 131) arranged for receiving, from a merchant device (3, 103), said payment request (9, 109) comprising first payment data, wherein said first payment data comprises at least a payment amount and a first unique identifier, wherein said receiving equipment (31, 131) is arranged for receiving an identification of a mobile user device (5, 105), wherein said mobile user device (5, 105) is associated with a customer identifier corresponding to said payment request (9, 109);
- connection equipment (33, 133) arranged for establishing, over the internet, a secure connection (13, 113) for carrying traffic between said server and said mobile user device (5, 105), wherein said receiving equipment (31, 131) is further arranged for receiving, from said mobile user device (5, 105), encrypted second payment data (15, 115) over said secure connection (13, 113), wherein said second payment data (15, 115) is encrypted using a unique public key (21, 121) and wherein said second payment data (15, 115) comprises at least a second unique identifier;
- decrypting equipment (35, 135) arranged for decrypting, using a private key (19, 119), said encrypted second payment data (15, 115), wherein said private key (19, 119) together with said unique public key (21, 121) forms a unique key pair for asymmetric encryption;
- determining equipment (37, 137) arranged for determining that said decrypted second payment data (15, 115) confirms said first payment data, thereby authorizing said payment request (9, 109).

13. A server (29) according to claim 12, wherein said receiving equipment (31) is further arranged for receiving said first unique identifier and said second unique identifier, wherein said first unique identifier comprises at least said identification of said mobile user device (5) and a merchant identifier associated with said merchant device (3) and wherein said second unique identifier comprises at least said identification of said mobile user device (5).

14. A server (129) according to claim 12, wherein said receiving equipment (131) is further arranged for receiving said first unique identifier and said second unique identifier, wherein said first unique identifier comprises at least a merchant identifier associated with said merchant device (103) and wherein said second unique identifier comprises at least a said identification of said mobile user device (105) and said merchant identifier associated with said merchant device (103).
